# EUROPEAN PATENT APPLICATION

(11) **EP 2 177 850 A1**
(43) Date of publication of application: **21.04.2010**
(21) Application number: 08790192.2
(22) Date of filing: 09.07.2008
(51) Int. Cl.: F25D 23/06, F25D 11/00

(54) **REFRIGERATION SYSTEM FOR CONTAINER AND PROCESS FOR MANUFACTURING THE SAME**

(30) Priority: 24.07.2007 JP 2007191611
(71) Applicant: Daikin Industries, Ltd., Osaka 530-8323 (JP)
(72) Inventor: IKEMIYA, Makoto, Sakai-shi Osaka 591-8511 (JP); UO, Takayuki, Mishima-gun Osaka 618-0013 (JP); KURIYAMA, Hideaki, Sakai-shi Osaka 591-8511 (JP)
(74) Representative: HOFFMANN EITLE
(86) International application number: PCT/JP2008/001840
(87) International publication number: WO 2009/013861

(57) **Abstract**

Disclosed is a structure in which part of an internal casing of a container refrigeration unit for cooling the container interior is reinforced, and which enables the internal casings to be produced more efficiently.

A casing (11) includes an external casing (12) whose periphery is fixed to a container body (1) to close an open end of the container body (1), and an internal casing (13) which covers a container interior side of the external casing (12). The internal casing (13) is formed by hot-pressing a material sheet (73) as a resin material by a pair of mold halves (75), with the material sheet (73) covering an entire press surface of one of the pair of mold halves (75) and with a reinforcement sheet (71, 72) which is made of a glass fiber being layered at part of the material sheet (73).

## Description

### TECHNICAL FIELD

The present invention relates to container refrigeration units for cooling the interior of a container, and specifically relates to increasing the stiffness of its internal casing made of a resin.

### BACKGROUND ART

Container refrigeration units have been used to provide cooling of the interior of a container for marine transportation etc.

Patent Document 1 shows an example container refrigeration unit of this type. The container refrigeration unit is located at an opening of a container whose one end is open. That is, the container refrigeration unit has a casing which seals the open end of the container. The casing has, at its lower portion, an external accommodation space which faces the container exterior. A compressor, a condenser, an external fan, etc. are accommodated in the external accommodation space.

The casing also has, at its upper portion, an internal accommodation space which faces the container interior. This internal accommodation space is partitioned from the container interior space by a partition plate. The partition plate is supported by side stays provided at both lateral end portions of the interior side of the casing. Further, an internal fan, an evaporator, etc. are disposed in the internal accommodation space to form an air flow path for the air in the container.

During the operation of the container refrigeration unit, the air in the container is led to the air flow path in the internal accommodation space by the internal fan, and is cooled when it passed through the evaporator. The cooled air flows out from the air flow path, and is returned to the container interior. That is, the container refrigeration unit provides cooling and freezing of the container interior by cooling the air in the container when the air passes through the air flow path and circulating the cooled air.

In general, the casing includes an external casing which is made of a metal and which is located on the container exterior side, and an internal casing which is made of a resin (FRP) and which covers the container interior side of the external casing. The method for fabricating the internal casing includes a hand lay-up method in which a resin is applied to a glass fiber by hand to form a resin layer on the glass fiber, and an SMC (sheet molding compound) molding in which a resin material is hot-pressed by a mold.

### CITATION LIST

### PATENT DOCUMENT

PATENT DOCUMENT 1: Japanese Patent Publication No. 2007-93122

### SUMMARY OF THE INVENTION

### TECHNICAL PROBLEM

Incidentally, in general, a force that may cause a shear deformation is applied to the stacked containers when, for example, the ship leans to one side. Thus, as a product test that simulates such a situation, a test is performed in which a force greater than an actual force is applied to a corner of the container to cause a shear deformation of the container and check the strength of the container when the shear deformation is caused. In such a test, particularly in the case where a force is simultaneously applied to two corners on the same side of the container, a force greater than a usual force acts on the casing of the container refrigeration unit located at the open end of the container body. That is, in such a test, a force in the direction of the container width is applied to only the upper portion of the casing, which results in a wave-like deformation of the upper portion of the casing in the direction orthogonal to the plane.

Here, as mentioned above, the internal casing which constitutes the container interior side of the casing is made of a resin. Therefore, stress may be concentrated in a smaller area, depending on the shape of the internal casing, and as a result, the stressed portion may be damaged.

Further, the internal casing is provided with heavy loads, such as an internal fan and an evaporator, which are placed in the internal accommodation space. Therefore, if the deformation of the container as described above causes a wave-like deformation of the casing in the direction orthogonal to the plane, a pulling stress is applied to the internal casing by the structural components, such as the internal fan and the evaporator. This may result in local damage of the connecting portion between the internal casing and the structural components.

As a solution to this problem, strength of part of the internal casing may be increased. However, to increase the strength of part of the internal casing, a reinforcement sheet made of a glass fiber needs to be disposed at a corresponding portion when the internal casing is molded. Therefore, in general, the resin internal casing is formed not by an SMC molding in which a material is made to flow by a hot press by a mold, but by a hand lay-up method in which a reinforcement sheet can be reliably disposed at a desired location, in order to increase the strength of part of the internal casing. However, the hand lay-up method is performed by hand, and therefore, productivity is low compared to the SMC molding. It is therefore difficult to efficiently produce the internal casings, part of each of which is reinforced, in large volumes.

The present invention was made in view of the above, and it is an object of the invention to provide a structure in which part of an internal casing of a container refrigeration unit for cooling the container interior is reinforced, and which enables the internal casings to be produced more efficiently.

### SOLUTION TO THE PROBLEM

To achieve the above object, an internal casing (13) of a container refrigeration unit (10) according to the present invention is obtained by hot-pressing a material sheet (73), with the material sheet (73) covering an entire press surface of one of the pair of mold halves (75) and with a reinforcement sheet (71, 72) being layered at part of the material sheet (73). It is thus possible to efficiently produce the internal casing (13) which is provided with the reinforcement sheet (71, 72) at a desired location.

The first aspect of the present invention is a container refrigeration unit, including: an external casing (12) whose periphery is fixed to a container body (1) to close an open end of the container body (1); and an internal casing (13) molded into a shape which covers a container interior side of the external casing (12), by hot-pressing a resin material by a pair of mold halves (75).

The internal casing (13) is formed by hot-pressing a material sheet (73) as the resin material by the pair of mold halves (75), with the material sheet (73) covering an entire press surface of one of the pair of mold halves (75) and with a reinforcement sheet (71, 72) which is made of a glass fiber being layered at part of the material sheet (73).

According to the above structure, the material sheet (73) as a resin material is hot-pressed by the pair of mold halves (75), with the material sheet (73) covering an entire press surface of one of the pair of mold halves (75). Therefore, the internal casing (13) can be formed without significant flow of the resin material. Thus, even if the reinforcement sheet (71, 72) made of a glass fiber is layered at a predetermined location and hot-pressed, the reinforcement sheet (71, 72) does not significantly move. Therefore, the reinforcement sheet (71, 72) can be positioned at a desired location with reliability. According to the above structure, the internal casing (13) of which a predetermined location is reliably reinforced can be efficiently formed by the SMC molding.

In the above structure, part of the internal casing (13) at which a structural component (15) accommodated in the internal casing (13) is attached is formed by hot-pressing a continuous strand mat (71) as the reinforcement sheet by the pair of mold halves (75), with the continuous strand mat (71) and the material sheet (73) being layered together (second aspect of the present invention).

As described, part of the internal casing (13) at which a structural component (15) accommodated in the internal casing (13) is attached is formed by hot-pressing not only the material sheet (73), but also the continuous strand mat (71), as a reinforcement sheet, which is layered together with the material sheet (73). The strength of the part of the internal casing (13) can thereby be increased.

In addition, a continuous strand mat (71) having a good resin impregnation is used as a reinforcement sheet. It is therefore possible to prevent separation of the continuous strand mat (71) from the resin material at a location at which the continuous strand mat (71) is disposed. Thus, even in the case where a force (hereinafter referred to as a racking load) is applied to two corners on the same side of the container (C) and a pulling force acts on the internal casing (13) due to displacement of the structural component (15), separation can be prevented at the part of the internal casing (13) at which the structural component (15) accommodated in the internal casing (13) is attached.

In particular, it is preferable that the part of the internal casing (13) at which the structural component (15) is attached is provided with an attachment fitting (16) such that the attachment fitting (16) extends over a plurality of attachment portions (42a) of the structural component (15) (third aspect of the present invention). With this structure, when a pulling force acts on the internal casing (13) due to the displacement of the structural component (15), a wider area of the internal casing (13) can receive the pulling force transmitted from the bolt fastening portion (42a) of the structural component (15) to the attachment fitting (16) provided to the internal casing (13). As a result, the internal casing (13) can be prevented from being damaged by the local application of a force to the internal casing (13).

Further, a stress concentration portion of the internal casing (13) is formed by hot-pressing a glass cloth (72) as the reinforcement sheet by the pair of mold halves (75), with the glass cloth (72) and the material sheet (73) being layered together (fourth aspect of the present invention). Since the glass cloth (72) as a reinforcement sheet and the resin material are layered together at a portion of the internal casing (13) on which stress is concentrated, the strength of the stress concentration portion of the internal casing (13) can be increased. The stress concentration portion is affected by a force in a pulling direction and a compression direction more than by a force in a separating direction. Thus, the strength of the internal casing (13) can be efficiently increased by providing the stress concentration portion with the glass mat (72) which have superior strength.

The fifth aspect of the present invention is a method of manufacturing a container refrigeration unit which includes an external casing (12) whose periphery is fixed to a container body (1) to close an open end of the container body (1), and an internal casing (13) molded into a shape which covers a container interior side of the external casing (12), by hot-pressing a resin material by a pair of mold halves (75).

The above method includes forming the internal casing (13) by hot-pressing a material sheet (73) as the resin material by the pair of mold halves (75), with the material sheet (73) covering an entire press surface of one of the pair of mold halves (75) and with a reinforcement sheet (71, 72) which is made of a glass fiber being layered at part of the material sheet (73).

According to the above method, the entire press surface of one of the pair of mold halves (75) is covered with the material sheet (73) as a resin material, and the internal casing (13) is molded by hot-pressing the material sheet (73) by the pair of mold halves (75). Thus, the internal casing (13) can be molded without significant flow of the resin material. This means that the hot press is possible with the reinforcement sheet (71, 72), which is made of a glass fiber, being reliably positioned at a predetermined location of the internal casing (13). As a result, internal casings (13), part of each of which is reinforced, can be efficiently produced in large volumes by the SMC molding.

According to the above-described method, the reinforcement sheet (71, 72) is hot-pressed by the pair of mold halves (75), with the reinforcement sheet (71, 72) being sandwiched between the material sheets (73) (sixth aspect of the present invention). By this method, the reinforcement sheet (71, 72) can be efficiently and reliably impregnated with the resin material. It is thus possible to increase the strength of the internal casing (13) with reliability. In the case where a reinforcement sheet is a mat having a relatively great thickness, such as the continuous strand mat (71), and is exposed, the reinforcement sheet may be damaged when hot-pressed by the pair of mold halves (75). However, damage can be reliably prevented by hot-pressing the reinforcement sheet (71, 72) sandwiched between the material sheets (73), as described above.

In addition, it is preferable that part of the internal casing (13) at which a structural component (15) accommodated in the internal casing (13) is attached is formed by hot-pressing a continuous strand mat (71) as the reinforcement sheet by the pair of mold halves (75), with the continuous strand mat (71) and the material sheet (73) being layered together (seventh aspect of the present invention).

By this method, it is possible to increase the strength of the part of the internal casing (13) at which a structural component (15) accommodated in the internal casing (13) is attached. In addition, the use of the continuous strand mat (71) as a reinforcement sheet can enhance the resin impregnation of the reinforcement sheet. As a result, separation is less likely to occur at the reinforced part. Therefore, according to the above structure, separation can be more reliably prevented at the part at which a structural component (15) is attached, even when a force is applied to two corners on the same side of the container (C) and the internal casing (13) receives a force in a pulling direction from the evaporator holding frame (15).

Further, it is preferable that a stress concentration portion of the internal casing (13) is formed by hot-pressing a glass cloth (72) as the reinforcement sheet by the pair of mold halves (75), with the glass cloth (72) and the material sheet (73) being layered together (eighth aspect of the present invention). By this method, it is possible to increase the strength of the stress concentration portion of the internal casing (13). In addition, the stress concentration portion to which a great force in a pulling direction and a compression direction is applied can be more reliably reinforced by using, as a reinforcement sheet, the glass cloth (72) having superior strength.

### ADVANTAGES OF THE INVENTION

According to the first aspect of the present invention, the internal casing (13) is formed by hot-pressing the material sheet (73) as a resin material, with the material sheet (73) covering an entire press surface of one of the pair of molding halves (75) and with the reinforcement sheet (71, 72) which is made of a glass fiber being layered at part of the material sheet (73). Therefore, the reinforcement sheet (71, 72) can be reliably positioned at the part of the material sheet (73) even by the SMC molding. This means that only an intended part of the internal casing (13) can be reinforced with reliability. Therefore, according to the above structure, it is possible to efficiently produce internal casings (13), part of each of which is strengthened, in large volumes.

According to the second aspect of the present invention, part of the internal casing (13) at which a structural component (15) is attached is formed by hot-pressing a continuous strand mat (71) as a reinforcement sheet, with the continuous strand mat (71) and the material sheet (73) being layered together. Therefore, even when a racking load is applied to the container (C), it is possible to reliably prevent separation at the part of the internal casing (13) at which a structural component (15) is attached, due to the displacement of the structural component (15) in a pulling direction with respect to the internal casing (13). Further, according to the third aspect of the present invention, an attachment fitting (16) is provided at the part of the internal casing (13) at which the structural component (15) is attached, such that the attachment fitting (16) extends over a plurality of attachment portions (42a) of the structural component (15). Thus, a wider area of the internal casing (13) can receive, via the attachment fitting (16), a pulling force applied by the structural component (15). As a result, local damage of the internal casing (13) due to the pulling force can be prevented.

According to the fourth aspect of the present invention, a stress concentration portion of the internal casing (13) is formed by hot-pressing a glass cloth (72) as a reinforcement sheet, with the glass cloth (72) and the material sheet (73) being layered together. Therefore, the stress concentration portion, at which the strength against a pulling force and a compression force is more required than the strength against separation, can be more reliably strengthened by the glass cloth (72) having superior strength.

According to the fifth aspect of the present invention, the internal casing (13) is formed by hot-pressing the material sheet (73) as a resin material, with the material sheet (73) covering an entire press surface of one of the pair of molding halves (75) and with the reinforcement sheet (71, 72) which is made of a glass fiber being layered at part of the material sheet (73). Therefore, the reinforcement sheet (71, 72) can be reliably positioned at a predetermined location of the internal casing (13). As a result, internal casings, of which a predetermined location is reliably reinforced, can be efficiently produced in large volumes by the SMC molding.

According to the sixth aspect of the present invention, the reinforcement sheet (71, 72) is hot-pressed, with the reinforcement sheet (71, 72) being sandwiched between the material sheets (73). Therefore, the reinforcement sheet (71, 72) can be more efficiently impregnated with the resin material, and the reinforcement sheet (71, 72) and the resin material can be more firmly unified. This can further increase the strength of the internal casing (13). In addition, because the reinforcement sheet (71, 72) is not exposed, the reinforcement sheet (71, 72) can be reliably prevented from being damaged by friction with the mold (75) at the time of hot press.

According to the seventh aspect of the present invention, the reinforcement sheet is a continuous strand mat (71). This continuous strand mat (71) is hot-pressed, with the continuous strand mat (71) and the material sheet (73) being layered together at the part of the internal casing (13) at which the structural component (15) is attached. It is therefore possible, as in the case of the second aspect of the present invention, to reliably prevent separation from occurring at the part of the internal casing (13) at which the structural component (15) is attached, due to the displacement of the structural component (15) in a pulling direction, even when a racking load is applied to the container (C).

According to the eighth aspect of the present invention, the reinforcement sheet is a glass cloth (72), and the glass cloth (72) is hot-pressed, with the glass cloth (72) and the material sheet (73) being layered together at a stress concentration portion of the internal casing (13). It is therefore possible, as in the case of the fourth aspect of the present invention, to reliably increase the strength of the stress concentration portion of the internal casing (13) by the glass cloth (72) having superior strength.

### BRIEF DESCRIPTION OF THE DRAWINGS

[FIG. 1] FIG. 1 is an oblique view of a container refrigeration unit according to the present embodiment, viewed from a container exterior side.
[FIG. 2] FIG. 2 is a cross-sectional view taken along the line II-II of FIG. 1.
[FIG. 3] FIG. 3 is an oblique view of an external casing viewed from the container interior side.
[FIG.4] FIG. 4 is an oblique view of a casing which includes the external casing and an internal casing which covers the container interior side of the external casing, viewed from the container interior side.
[FIG. 5] FIG. 5 is an oblique view of the casing, viewed from the container interior side, to which an evaporator holding frame is attached.
[FIG. 6] FIG. 6 is a plan view of the internal casing for illustrating the location of a reinforcement sheet.
[FIG. 7] FIG. 7 is a drawing for schematically illustrating a method for fabricating the internal casing.
[FIG. 8] FIG. 8 is a cross-sectional view taken along the line VIII-VIII of FIG. 7 for showing the state of layered sheets of the internal casing before hot press.

### DESCRIPTION OF REFERENCE CHARACTERS

- 1: Container body
- 10: Container refrigeration unit
- 11: Casing
- 12: External casing
- 13: Internal casing
- 15: Evaporator holding frame (structural component)
- 16: Attachment fitting
- 26: Interior fans
- 40: Side stays
- 42: Extension plate
- 42a: Bolt fastening portion (attachment portion)
- 71: Continuous strand mat (reinforcement sheet)
- 72: Glass cloth (reinforcement sheet)
- 73: Material sheet
- 75: Mold
- C: Container

### DESCRIPTION OF EMBODIMENTS

An embodiment of the present invention will be described in detail hereinafter based on the drawings. Essentially, the following descriptions of a preferable embodiment are merely examples which are not intended to limit the present invention, its application, or its range of use.

A container refrigeration unit (10) of the present embodiment provides cooling or freezing of the interior of the container (C) used for marine transportation etc. and is disposed so as to seal the open end of the container body (1) having a cylindrical shape whose one end is closed. More specifically, the casing (11) of the container refrigeration unit (10) is fastened and fixed to the open end portion of the container body (1) with a plurality of bolts.

The container refrigeration unit (10) has a refrigerant circuit (not shown). That is, the container refrigeration unit (10) provides cooling of the air inside the container (C), using a refrigeration cycle of the refrigerant circuit. The general structure of the container refrigeration unit (10) will be described below.

### <General Structure of Container Refrigeration Unit>

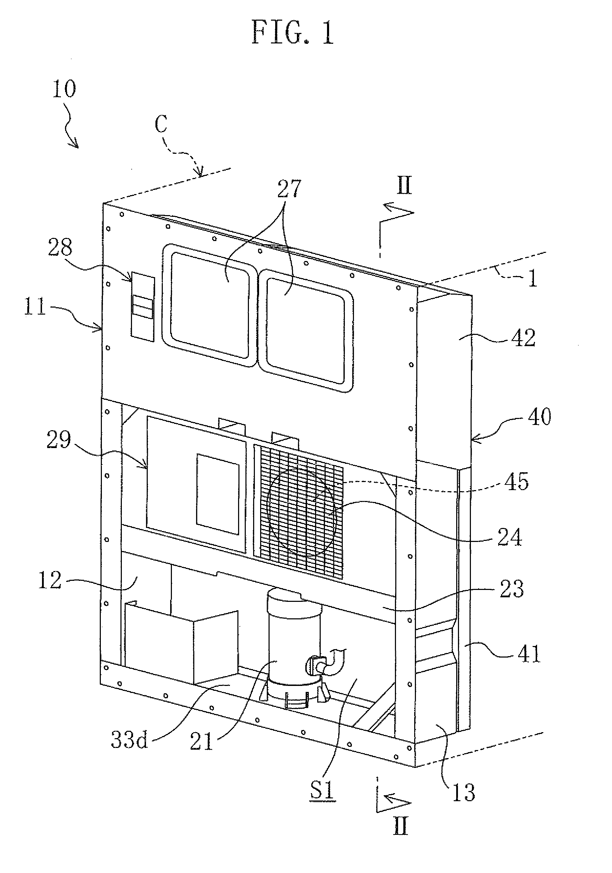

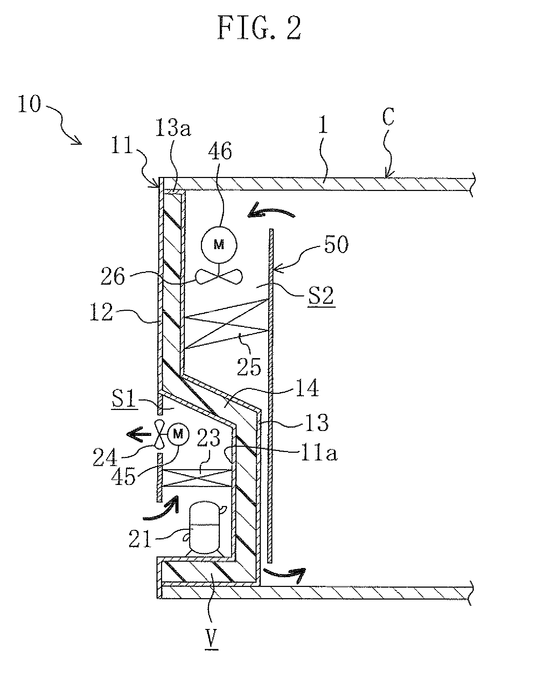

As shown in FIG. 1 and FIG. 2, the container refrigeration unit (10) has a casing (11) whose periphery is attached to the container body (1) to close the open end of the container body (1) having a cylindrical shape whose one end is closed. A lower portion of the casing (11) protrudes into the interior of the container (C), and this forms a recessed portion (11a) at a lower portion of the casing (11) on the container exterior side. In other words, an external accommodation space (S1) is formed at the lower portion of the casing (11) on the exterior side of the container, and an internal accommodation space (S2) is formed at an upper portion of the casing (11) on the interior side of the container.

A partition plate (50) supported by side stays (40) is disposed on the interior side of the casing (11). This partition plate (50) separates the interior of the container (C) and the internal accommodation space (S2) from each other. The partition plate (50) is disposed such that space is left between the partition plate (50) and each of the top and bottom inner surfaces of the container body (1) (see FIG. 2).

A compressor (21), a condenser (23), an external fan (24), a motor (45) for the external fan (24) etc. are accommodated in the external accommodation space (S1). The compressor (21) and the condenser (23) are connected to the refrigerant circuit (not shown). The external fan (24) is rotated by the motor (45), and draws air outside the container into the external accommodation space (S1) and transfers the air to the condenser (23). The condenser (23) is configured to exchange heat between the air outside the container and a refrigerant. That is, the external accommodation space (S1) constitutes an external air flow path.

An evaporator (25), interior fans (26), and motors (46) for the interior fans (26) are accommodated in an upper portion of the internal accommodation space (S2) on the container interior side of the casing (11). Like the condenser (23), this evaporator (25) is also connected to the refrigerant circuit (not shown). The interior fans (26) are rotated by the motors (46), and draw air inside the container (C) through the space above the partition plate (50) and transfer the air to the evaporator (25). The evaporator (25) exchanges heat between the air inside the container (C) and a refrigerant, and the air is returned to the container interior through the space below the partition plate (50) by the interior fans (26). The internal accommodation space (S2) therefore constitutes an internal air flow path.

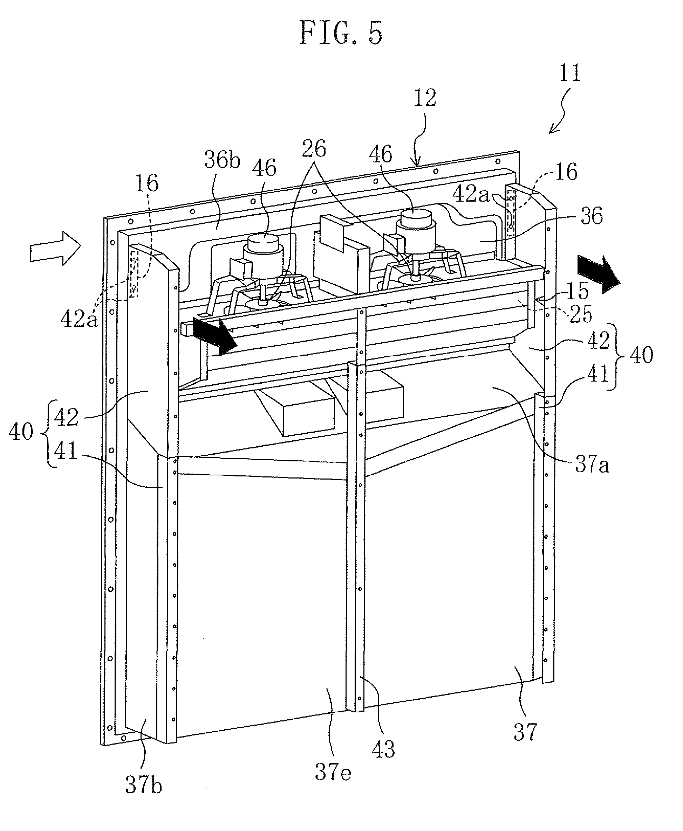

As shown in FIG. 5, an evaporator holding frame (15) for holding the interior fans (26), the motors (46) and the evaporator (25) is provided in an upper portion of the casing (11) on the container interior side, and extends across the width of the casing. The evaporator holding frame (15) is configured to support the interior fans (26) and the motors (46) at a location above the evaporator (25) so that the air inside the container (C) can flow downward from above the evaporator (25) by the interior fans (26).

One side of an extension plate (42, 42), which constitutes an upper portion of the side stay (40, 40), is connected to a lateral end of the evaporator holding frame (15). Specifically, according to this embodiment, attachment fittings (16, 16) are provided on the casing (11) so as to correspond to connecting portions of the extension plates (42, 42), as described later.

Further, the lateral center portion of the evaporator holding frame (15) is connected to the upper end of the frame support member (43) which is fixed to the container interior side of the lateral center portion of the casing (11) and which extends vertically.

The side stays (40) are fixed to the container interior side of the casing (11). Specifically, each side stay (40) has a column portion (41) connected to the lower portion of the casing (11) that protrudes into the container interior, and has the extension plate (42) placed on the column portion (41) and connected to the upper end of the column portion (41) and to the upper portion of the casing (11).

Thus, the both lateral ends of the evaporator holding frame (15) are supported by the side stays (40), and the lateral center portion of the evaporator holding frame (15) is supported by the frame support member (43). The frame support member (43) is a column-like member whose cross section is generally C-shaped, and is located at the lateral center portion of the lower portion of the casing (11) on the container interior side so as to extend vertically.

As shown in FIG. 1, the casing (11) has, at its upper portion, a view window (27) provided with an openable door used during maintenance, and has a ventilator (28). The ventilator (28) constitutes a ventilation device for ventilating air inside the container. Further, an electrical component box (29) is disposed at a location close to the external fan (24) in the external accommodation space (S1) of the casing (11).

As shown in FIG. 2, the casing (11) has an external casing (12) located on the container exterior side, and an internal casing (13) located on the container interior side. The external casing (12) is made of an aluminum alloy, and is attached to the periphery of the container body (1) so as to close the end face of the container body (1). The internal casing (13) is made of a fiber-reinforced plastic (FRP), and is attached such that it covers the container interior side of the external casing (12).

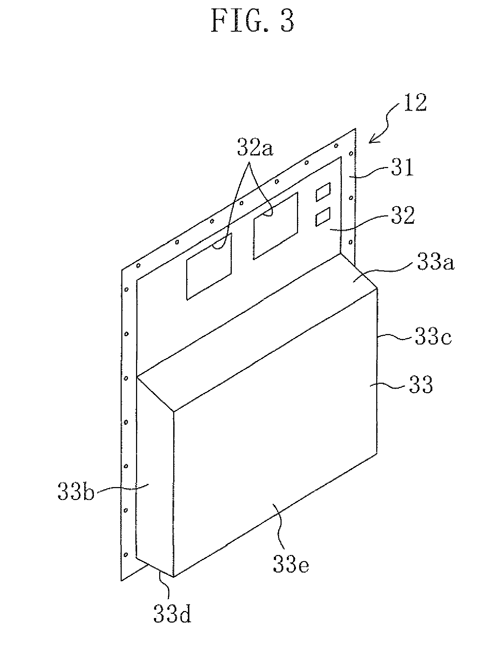

As is also shown in FIG. 3, a lower portion of the external casing (12) protrudes into the container interior. The external casing (12) includes an upper portion (32) having an approximately planner shape, a lower protrusion portion (33) which protrudes into the container interior and which has an approximately rectangular parallelepiped shape, and an attachment portion (31) which is located at the outer periphery of the external casing (12) so as to surround the upper portion (32) and the lower protrusion portion (33) and which has a rectangular shape when viewed from the front. Flanges (34) (not shown) having a generally P-shaped cross section are welded to parts of the attachment portion (31) which extend vertically (i.e., at both end portions along the width dimension of the external casing), and the parts are provided with a plurality of holes for bolts. Also, aluminum alloy flanges (not shown) having an approximately F-shaped cross section are provided at parts of the attachment portion (31) which extend laterally (i.e., at both end portions along the vertical dimension of the external casing).

As shown in FIG. 3, the upper portion (32) of the external casing (12) is continuous with the upper side of the lower protrusion portion (33), and is provided with two openings (32a, 32a) as view windows at locations close to the upper end. Specifically, each of these openings (32a, 32a) has a generally rectangular shape, and the openings (32a, 32a) formed in the upper portion (32) are arranged next to each other in a lateral direction. The openings (32a, 32a) formed in the upper portion (32) and the openings (36e, 36e) formed in the internal casing (13) together constitutes the view windows (27), as described later.

The lower protrusion portion (33) includes an upper surface portion (33a), two side surface portions (33b, 33c), a lower surface portion (33d), and a bottom surface portion (33e). Specifically, each of the upper surface portion (33a), the lower surface portion (33d), and the bottom surface portion (33e) has a generally rectangular shape, while the side surface portions (33b, 33c) have a generally trapezoidal shape with its one leg inclined. Thus, as shown in FIG. 3, the lower protrusion portion (33) includes the upper surface portion (33a), the side surface portions (33b, 33c), the lower surface portion (33d), and the bottom surface portion (33e) connected to each other to form a box-like shape, in which the upper surface portion (33a) is inclined downward to the lower side of the container.

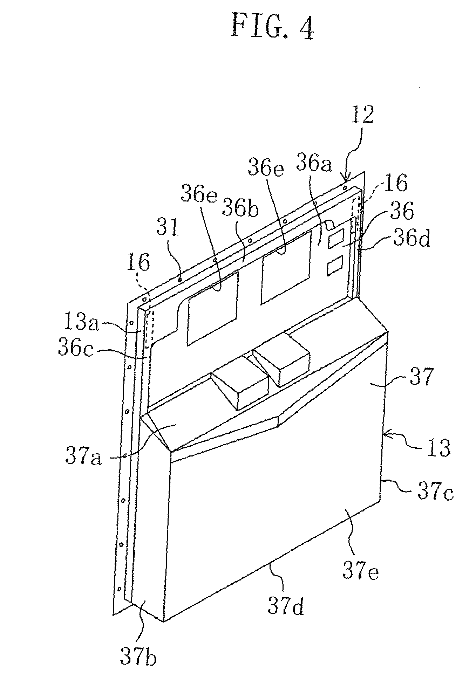

As shown in FIG. 2 and FIG. 4, the internal casing (13) follows the shape of the external casing (12), and has a lower cover portion (37) which protrudes into the container interior so as to correspond to the external casing (12), and a flat plate-like upper cover portion (36). The lower cover portion (37) and the upper cover portion (36) are integrally formed with each other. The upper cover portion (36) is continuous with the upper side of the lower cover portion (37).

The upper cover portion (36) includes a cover body (36a), and a top frame (36b) and side frames (36c, 36d) arranged so as to form a generally C-shape and surround the cover body (36a). The top frame (36b) and the side frames (36c, 36d) are located on the upper side and the lateral sides of the cover body (36a), respectively, and the side frames (36c, 36d) extend downward from the both ends of the top frame (36b) to form a generally C-shape as a whole. Further, the top frame (36b) and the side frames (36c, 36d) slightly project into the container interior from the cover body (36a). The cover body (36a) is provided with two openings (36e, 36e) for view windows which correspond to the openings (32a) in the upper portion (32) of the external casing (12).

The shape of the lower cover portion (37) is approximately the same as the shape of the lower protrusion portion (33) of the external casing (12). The lower cover portion (37) includes an upper surface portion (37a), two side surface portions (37b, 37c), a lower surface portion (37d), and a bottom surface portion (37e). The lower cover portion (37) is slightly bigger than the lower protrusion portion (33) of the external casing (12) so that the lower cover portion (37) can cover the lower protrusion portion (33) from the container interior side.

The lower surface portion (37d) is provided with an opening (not shown) for injecting a foaming agent (60) into a space (V) (a foaming agent space) between the external casing (12) and the internal casing (13).

As shown in FIG. 2 and FIG. 4, the outer periphery portion (13a) of the internal casing (13) is bent toward the exterior of the container (toward the external casing). The outer periphery of the internal casing (13) is positioned on the attachment portion (31) of the external casing (12) in the state in which the internal casing (13) is attached to the external casing (12).

Thus, when the internal casing (13) is attached to the external casing (12), the upper cover portion (36) covers the container interior side of the upper portion (32), and the lower cover portion (37) covers the container interior side of the lower protrusion portion (33), such that the foaming agent space (V) as a thermal barrier (14) is formed between the external casing (12) and the internal casing (13). The foaming agent (60) is injected into the foaming agent space (V) through the injection opening of the internal casing (13), and is foamed to form a thermal barrier layer (14) as shown in FIG. 2.

Further, according to the present embodiment, the attachment fittings (16) are provided on the container exterior side of the side frames (36c, 36d), which constitute the upper cover portion (36) of the internal casing (13), so as to correspond to attachment portions (bolt fastening portions (42a, 42a)) of the extension plates (42) of the side stays (40) which support the both end portions of the evaporator holding frame (15), as shown in FIG. 4 and FIG. 5. The attachment fittings (16) are metal plate members having a generally rectangular shape. Each attachment fitting (16) is positioned so as to extend over the plurality of bolt fastening portions (42a, 42a) (two fastening portions in the example of the drawing) of the extension plate (42) of the side stay (40).

With this structure, greater part of the extension plates (42) of the side stays (40), which support the evaporator holding frame (15), can be supported by the attachment fittings (16). Thus, even if a force (a racking load in the direction of white arrow in FIG. 5) is applied, for example, to two corners on the same side of the container (C) to result in causing displacement of the evaporator holding frame (15) in a pulling direction (in the direction of black arrows in FIG. 5) with respect to the internal casing (13), the attachment fittings (16) allows greater part of the internal casing (13) to receive the pulling force applied by the evaporator holding frame (15). Therefore, local damage of the internal casing (13) can be prevented. According to the present embodiment, each attachment fitting (16) extends over two bolt fastening portions (42a, 42a). However, the number is not limited to two, and the attachment fitting (16) may be provided so as to extend over three or more bolt fastening portions.

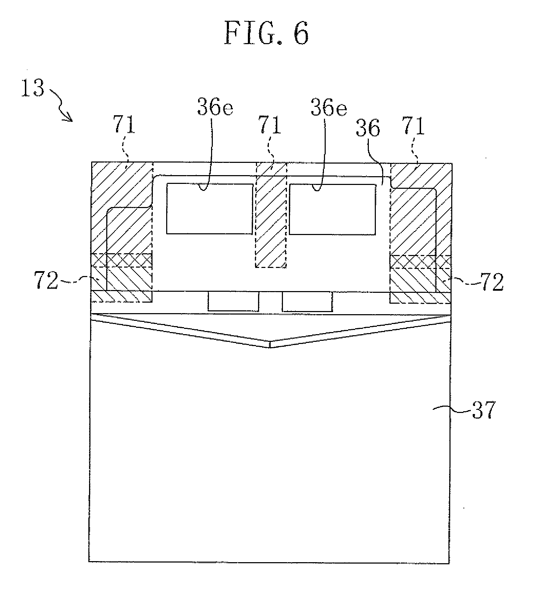

According to the present embodiment, as shown in FIG. 6, reinforcement sheets (71, 72) made of a glass fiber are disposed at parts of inside of the internal casing (13) made of a resin. Specifically, continuous strand mats (71, 71, 71) are respectively disposed at both right and left end portions and the middle portion (between the openings (36e, 36e)) of the upper cover portion (36) of the internal casing (13). Glass cloths (72, 72) are respectively disposed in the areas from lower parts of the both right and left end portions of the upper cover portion (36) to upper parts of both right and left end portions of the lower cover portion (37).

More specifically, the continuous strand mats (71) are mainly disposed in the areas to which the extension plates (42) of the side stays (40) supporting the evaporator holding frame (15) are attached, and thereby reinforces the internal casing (13) so that the internal casing (13) can be resistant to the pulling force of the evaporator holding frame (15) when the racking load as described above is applied. In addition, the provision of the continuous strand mats (71) having good impregnation characteristics in the areas where the evaporator holding frame (15) is supported, allows the continuous strand mats (71) to be unified with the resin, and thereby, separation can be more reliably prevented in the areas where the evaporator holding frame (15) is supported. This means that the separation at the internal casing (13) can be more reliably prevented even in the case where the evaporator holding frame (15) is displaced in the pulling direction with respect to the internal casing (13).

The glass cloths (72) are disposed in the areas on which stress tends to be concentrated when the racking load as described above is applied to the container (C), that is, mainly in the areas located at both end portions along the widthwise direction, at the boundary between the generally flat plate-like upper cover portion (36) and the lower cover portion (37) which protrudes in the container interior. The provision of the glass cloths (72) having superior strength in the areas on which stress is concentrated can increase the strength of the stress concentration areas more efficiently. Here, the impregnation characteristics of the glass cloths (72) are inferior to the impregnation characteristics of the continuous strand mats (71). However, the stress concentration areas require an increase in strength in a pulling direction and a compression direction more than an increase in strength against separation. Therefore, provision of the glass cloths (72) which have superior strength is preferable.

### -Method for Forming Casing-

A method for forming the casing (11) having the above-described structure will be described hereinafter. To form the casing (11), the external casing (12) made of an aluminum alloy and the internal casing (13) made of a resin are attached to each other, and in this state, each hole or the like is sealed. Then, the foaming agent (60) is injected into a foaming agent space (V) between the casings (12, 13), and the foaming agent (60) is foamed.

Specifically, first, the external casing (12) made of an aluminum alloy is formed, for example, by welding aluminum parts, and the internal casing (13) made of a resin (FRP) is formed by press or the like. The method for fabricating the internal casing (13) will be described in detail hereinafter.

The internal casing (13) is fabricated by the SMC molding in which a resin material is hot-pressed by a mold (75). The SMC molding can produce molded articles having the same shape in large volumes in a short period of time, compared to the hand lay-up method in which each layer is formed by hand. According to a typical SMC molding, a resin material is hot-pressed by a mold to make the resin material flow in the space between the mold halves, thereby forming a molded resin article having a predetermined shape.

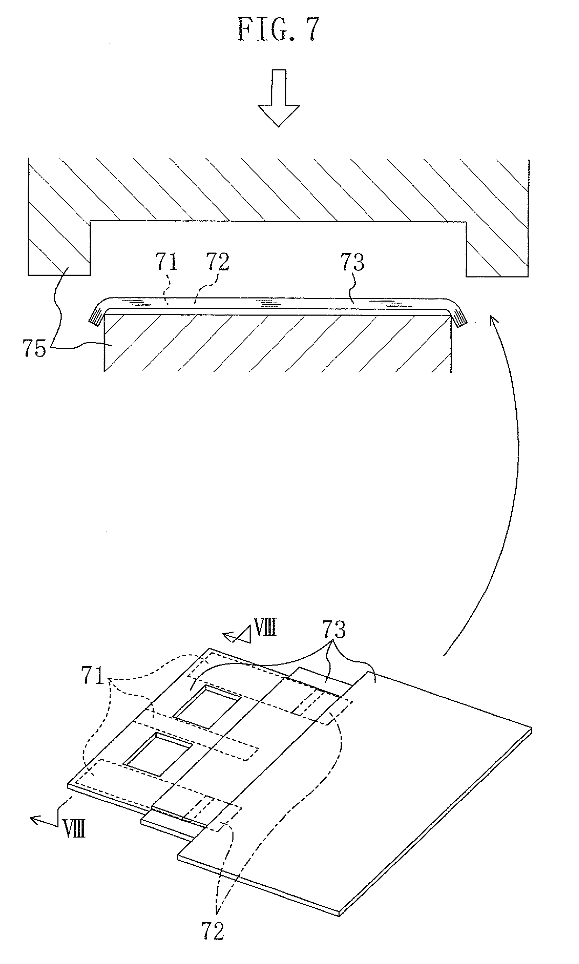

On the other hand, according to the present embodiment, a thin material sheet (73) is used as the resin material, and the material sheet (73) is hot-pressed, with the material sheet (73) being placed so as to cover the entire press surface of one of the pair of mold halves (75). The resin material therefore flows very little during the hot press by the mold (75). Specifically, as shown in FIG. 7, a plurality of material sheets (73, 73, ... ) made of a resin material are layered such that the material sheets (73, 73, ... ) have approximately the same size as the size of the internal casing (13), and in that state, the material sheets (73, 73, ... ) are mounted on the mold (75) and hot-pressed by a pressing machine (not shown).

Here, the material sheet (73) is made of a resin material (e.g., polyester) to which a binder (e.g., styrene) is added and which is mixed with short glass fibers.

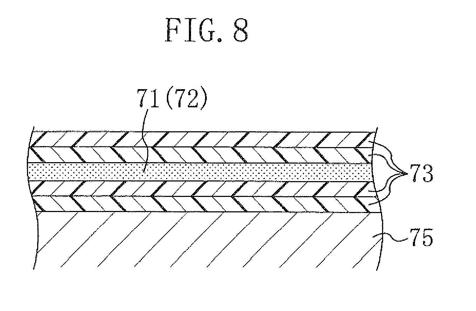

When the material sheets (73, 73, ... ) are layered, the continuous strand mats (71, 71, 71) and the glass cloths (72, 72) as reinforcement sheets are placed at predetermined locations (see FIG. 6) as shown in broken line and chain line of FIG. 7. Here, as shown in FIG. 8, it is preferable that the continuous strand mats (71, 71, 71) and the glass cloths (72, 72) are placed such that the continuous strand mats (71, 71, 71) and the glass cloths (72, 72) are sandwiched between the material sheets (73, 73) (according to the example of the drawing, two layers of material sheet are located on each of the upper and lower sides of the continuous strand mats (71, 71, 71) and the glass cloths (72, 72)). This is done to prevent the continuous strand mat (71) which has a relatively great thickness from being exposed and damaged by friction with the mold (75).

Although not shown in the drawings, using a jig capable of moving the sheets onto the mold (75) is preferable in the case where the material sheets (73) etc. are not layered on the mold (75) but are layered beforehand at a different place as in the above case. In addition, FIG. 7 shows an example arrangement of the material sheets (73) and the reinforcement sheets (71, 72). These sheets (71, 72, 73) may be placed at any locations as long as the internal casing (13) can be formed. Further, although FIG. 8 shows the structure in which two layers of the material sheets (73) are located on each of the upper and lower sides of the reinforcement sheets (71, 72). However, the structure is not limited to this structure, but three layers of the material sheets (73) may be provided on each of the upper and lower sides of the reinforcement sheets (71, 72). Also, a plurality of reinforcement sheets (71, 72) may be sandwiched between the material sheets (73) to provide a plurality of layers of the reinforcement sheets (71, 72).

After the formation of the internal casing (13) and the external casing (12) in the manner as described above, each of the casings (12, 13) is subjected to various kinds of working, such as formation of holes, and the flanges (34) etc. are welded to the attachment portion (31) of the external casing (12). Then, holes and gaps of the external casing (12) and internal casing (13) are sealed with a sealing material. After that, the external casing (12) and the internal casing (13) are attached to each other. The joint between the external casing (12) and the internal casing (13) is also sealed by applying a sealing material.

Next, the space (V) between the external casing (12) and the internal casing (13) is filled with the foaming agent (60), and the foaming agent (60) is foamed. It is preferable that, to inject the foaming agent (60) in the space (V) between the external casing (12) and the internal casing (13), the upper portion of the casings (12, 13) is placed in a lower location than the lower portion of the casings (12, 13), and the foaming agent (60) is injected through an injection opening (not shown) formed in the lower surface portion (37d) of the lower cover portion (37) of the internal casing (13). By this method, the space (V) can be efficiently and reliably filled with the foaming agent (60).

### -Operational Behavior-

Operation of the container refrigeration unit (10) is started by actuation of the compressor (21), the external fan (24) and the interior fans (26). In the refrigerant circuit of the container refrigeration unit (10), a refrigerant discharged from the compressor (21) is transferred to the condenser (23). In the condenser (23), heat is exchanged between the refrigerant circulating in the condenser (23) and the air outside the container that is supplied by the external fan (24). As a result, heat of the refrigerant is transferred to the air outside the container, and the refrigerant is condensed.

The refrigerant condensed by the condenser (23) is depressurized by an expansion valve, and is then transferred to the evaporator (25). In the evaporator (25), heat is exchanged between the refrigerant circulating in the evaporator (25) and the air inside the container that is supplied by the interior fans (26). As a result, the refrigerant absorbs heat from the air inside the container and evaporates, and the air inside the container is cooled. As shown in FIG. 2, the air inside the container flows into the internal accommodation space (S2) from the upper side of the partition plate (50), and passes through the evaporator (25). The air inside the container is cooled by the evaporator (25), and is then returned to the container interior from the lower side of the partition plate (50). The refrigerant evaporated by the evaporator (25) is drawn into the compressor (21) and is compressed again.

### -Effects of Embodiment-

As described above, according to the present embodiment, part of the internal casing (13) which constitutes the casing (11) of the container refrigeration unit (10) is provided with the reinforcement sheets (71, 72). Therefore, partial increase in the strength of the internal casing (13) is possible. Specifically, continuous strand mats (71) are provided at locations of the internal casing (13) at which the evaporator holding frame (15), for holding the interior fans (26) and the evaporator (25) accommodate in the internal accommodation space (S2), is connected via the extension plates (42) of the side stays (40). Separation at the connection locations of the internal casing (13) can thus be prevented even in the case where a racking load is applied to the container (C) to result in causing displacement of the evaporator holding frame (15) in the pulling direction and result in a pulling force acting on the internal casing (13). In addition, glass cloths (72) as reinforcement sheets are provided at locations of the internal casing (13) between the upper cover portion (36) and the lower cover portion (37), i.e., locations on which stress is concentrated when a racking load is applied to the container (C). Thus, the strength of the stress concentration portion can be reliably increased.

Further, at the time of formation of the internal casing (13), the material sheet (73) is placed so as to cover the entire press surface of the mold (75), and the material sheet (73) is hot-pressed by the mold (75), with the continuous strand mats (71) and the glass cloths (72) being provided at the above-described locations. Thus, the internal casing (13), part of which is provided with optimum reinforcement, can be obtained by the SMC molding capable of efficient production.

With the above structure, it is possible to efficiently produce, in large volumes, the internal casings (13), part of each of which is reliably reinforced. Therefore, both the strength of the internal casing (13) and the efficiency in the production of the internal casing (13) can be increased.

Further, the continuous strand mats (71) and the glass cloths (72) are sandwiched between the material sheets (73) made of a resin material, and in this state, the continuous strand mats (71) and the glass cloths (72) are hot-pressed. It is therefore possible to reliably prevent the continuous strand mat (71), which has a relatively great thickness, from being damaged by friction with the mold (75) at the time of hot press.

Further, the attachment fittings (16) are provided at the locations of the internal casing (13) at which the evaporator holding frame (15) is attached via the extension plate (42) of the side stays (40), so as to extend over a plurality of bolt fastening portions (42a, 42a) of the extension plate (42). Therefore, even when a racking load is applied to the container (C) and a pulling force is applied to the internal casing (13) by the evaporator holding frame (15), the attachment fittings (16, 16) allow a wider area of the internal casing (13) to receive the pulling force. As a result, local damage of the internal casing (13) can be prevented.

### <<Other Embodiments>>

The following structures may also be used in the above-described embodiment.

According to the above embodiment, the continuous strand mats (71) as reinforcement sheets are provided at the locations of the internal casing (13) at which the evaporator holding frame (15) is attached, and the glass cloths (72) as reinforcement sheets are provided at the locations on which stress is concentrated. However, reinforcement sheets may be provided at any locations other than the above locations. The reinforcement sheets are not limited to the continuous strand mats (71) and the glass cloths (72) used in the above embodiment, but may be anything made of a glass fiber that is capable of reinforcing an internal casing made of a resin.

### INDUSTRIAL APPLICABILITY

As described above, the present invention relates to container refrigeration units for cooling the interior of a container, and is particularly useful as a reinforcement structure for an internal casing made of a resin and located on the container inter side.

## Claims

1. A container refrigeration unit, comprising:
an external casing (12) whose periphery is fixed to a container body (1) to close an open end of the container body (1); and
an internal casing (13) molded into a shape which covers a container interior side of the external casing (12), by hot-pressing a resin material by a pair of mold halves (75), wherein
the internal casing (13) is formed by hot-pressing a material sheet (73) as the resin material by the pair of mold halves (75), with the material sheet (73) covering an entire press surface of one of the pair of mold halves (75) and with a reinforcement sheet (71, 72) which is made of a glass fiber being layered at part of the material sheet (73).

2. The container refrigeration unit of claim 1, wherein
part of the internal casing (13) at which a structural component (15) accommodated in the internal casing (13) is attached is formed by hot-pressing a continuous strand mat (71) as the reinforcement sheet by the pair of mold halves (75), with the continuous strand mat (71) and the material sheet (73) being layered together.

3. The container refrigeration unit of claim 2, wherein
the part of the internal casing (13) at which the structural component (15) is attached is provided with an attachment fitting (16) such that the attachment fitting (16) extends over a plurality of attachment portions (42a) of the structural component (15).

4. The container refrigeration unit of claim 1, wherein
a stress concentration portion of the internal casing (13) is formed by hot-pressing a glass cloth (72) as the reinforcement sheet by the pair of mold halves (75), with the glass cloth (72) and the material sheet (73) being layered together.

5. A method of manufacturing a container refrigeration unit which includes an external casing (12) whose periphery is fixed to a container body (1) to close an open end of the container body (1), and an internal casing (13) molded into a shape which covers a container interior side of the external casing (12), by hot-pressing a resin material by a pair of mold halves (75), the method comprising:
forming the internal casing (13) by hot-pressing a material sheet (73) as the resin material by the pair of mold halves (75), with the material sheet (73) covering an entire press surface of one of the pair of mold halves (75) and with a reinforcement sheet (71, 72) which is made of a glass fiber being layered at part of the material sheet (73).

6. The method of claim 5, wherein
the reinforcement sheet (71, 72) is hot-pressed by the pair of mold halves (75), with the reinforcement sheet (71, 72) being sandwiched between the material sheets (73).

7. The method of claim 5, wherein
part of the internal casing (13) at which a structural component (15) accommodated in the internal casing (13) is attached is formed by hot-pressing a continuous strand mat (71) as the reinforcement sheet by the pair of mold halves (75), with the continuous strand mat (71) and the material sheet (73) being layered together.

8. The method of claim 5, wherein
a stress concentration portion of the internal casing (13) is formed by hot-pressing a glass cloth (72) as the reinforcement sheet by the pair of mold halves (75), with the glass cloth (72) and the material sheet (73) being layered together.
